# EUROPEAN PATENT APPLICATION

(11) **EP 1 441 007 A1**
(43) Date of publication of application: **28.07.2004**
(21) Application number: 02772897.1
(22) Date of filing: 25.09.2002
(51) Int. Cl.: C08L 25/04

(54) **HYDROGENATED STYRENE POLYMER RESIN COMPOSITION AND OPTICAL ELEMENTS**

(30) Priority: 27.09.2001 JP 2001296327
(71) Applicant: TEIJIN LIMITED, Osaka-shi Osaka 541-0054 (JP); BAYER AG, 51368 Leverkusen (DE)
(72) Inventor: KIDO, Nobuaki c/o Iwakuni Res.Center Teijin Ltd., Iwakuni-shi, Yamaguchi 740-0014 (JP); TAKEUCHI, Masaki c/o Iwakuni Res.Center Teijin Ltd, Iwakuni-shi, Yamaguchi 740-0014 (JP); MATSUMURA, Shunichi Iwakuni Res.Center TeijinLtd., Iwakuni-shi, Yamaguchi740-0014 (JP); NITTA, Hideaki c/o Iwakuni Res. Center Teijin Ltd., Iwakuni-shi, Yamaguchi 740-0014 (JP)
(74) Representative: Hallybone, Huw George
(86) International application number: PCT/JP2002/009823
(87) International publication number: WO 2003/029347

(57) **Abstract**

To provide a resin composition which is suitable for use as a material for optical parts and disk substrates and molded products thereof

The resin composition comprises:
(1) 10 to 90 wt% of a first hydrogenated, polymerized styrene which contains a hydrogenated, polymerized styrene unit in an amount of more than 95 wt% and 99.99 wt% or less and has a weight average molecular weight of 30,000 to 300,000; and
(2) 10 to 90 wt% of a second hydrogenated, polymerized styrene which contains a hydrogenated, polymerized styrene unit in an amount of 60 to 95 wt% and has a weight average molecular weight of 30,000 to 200,000,
   "wt%" being based on 100 wt% of the total of the first hydrogenated, polymerized styrene and the second hydrogenated, polymerized styrene.

## Description

### Field of the Invention

The present invention relates to a resin composition comprising at least two different hydrogenated, polymerized styrenes and to optical parts. More specifically, it relates to a resin composition which has low water absorption, relaxes quickly when it is molten and thereby facilitates the production of a disk substrate or optical part having small residual strain when it is melt molded and to optical parts which are molded products of the resin composition.

### Description of the Prior Art

In recent years, the information recording densities of optical disks which information can be read from and written to by light and hard disks making use of magnetism have been increasing. In the field of optical pars, plastic lenses making use of unrestricted moldability of plastics, such as pick-up lenses and fθ lenses used for reading and writing information from and to optical disks have been developed and used for various purposes more and more.

For instance, optical recording by means of a laser enables information to be recorded, stored and reproduced at a high density. Of these, large-capacity digital versatile disks (DVD) have recently been implemented for an optical disk as a substitute for conventional CDs and developed for various application purposes. As the information recording density increases, the improvement of transmittance at a short wavelength range and characteristic properties such as optical isotropy and form stability to humidity are becoming more and more important in these fields.

Polycarbonate resins and polymethyl methacrylate resins have been used as materials for optical disks because they have excellent optical properties. Of these, polycarbonate resins are widely used as disk materials because they have excellent transparency, heat resistant stability and toughness.

However, molded products of polycarbonate resins tend to have optical anisotropy due to a large intrinsic birefringence factor because they have an aromatic ring in the molecule, and polymethyl methacrylate has poor dimensional stability and low heat resistance due to extremely high water absorption. A polycarbonate is currently used in optical disk substrates but the large birefringence of the polycarbonate and the warp of a disk by moisture absorption have been apprehended along with the growing capacity of opto-magnetic recording disks (MOD), the development of digital disks for other applications and increasing recording density typified by the development of digital or other disks and a blue laser. Optical parts other than optical disks also have the same problems.

As one of the materials which can solve the above problems, there is proposed a hydrogenated styrene-based polymer. For example, JP-B 7-114030 (the term "JP-B" as used herein means an "examined Japanese patent publication") discloses an optical disk having a substrate made from a hydrogenated polystyrene-based resin having a vinylcyclohexane content of 80 wt% or more. This resin has high light transmission and much smaller birefringence and water absorption than a polycarbonate resin and has preferred characteristic properties as a material for optical disks and material for other optical applications.

However, when a hydrogenated styrene-based polymer is used, satisfactory results in terms of heat resistance and mechanical properties are not always obtained. Then, a hydride of a styrene-conjugated diene block copolymer obtained by block copolymerizing styrene with a conjugated diene such as isoprene or butadiene is used for optical applications such as optical disk substrates to improve hydrogenated polystyrene (Japanese Patent No. 2730053, Japanese Patent No. 2725402 and WO01/12680A1). Further, when the thickness of a substrate is 0.6 mm or less like DVD and the hydrogenated styrene-based polymer is injection compression molded, the warp of the obtained molded product tends to be large. Since two substrates are assembled together for the production of DVD, warp is alleviated to a certain degree but it has been difficult to obtain substrates having high flatness stably.

Although this warp problem is very serious when a plastic substrate is used as a substrate for HDD which must be flat, it has been difficult to produce a substrate having excellent flatness from a hydrogenated styrene-based polymer.

### Summary of the Invention

It is an object of the present invention to provide a resin composition suitable for use as a material for optical parts and disk substrates and an optical part which is a molded product of the resin composition. It is another object of the present invention to provide a resin composition which suitably provides a molded product having little anisotropy and optical strain due to quick relaxation of alignment in molding and an optical part which is a molded product of the resin composition.

Other objects and advantages of the present invention will become apparent from the following description.

According to the present invention, firstly, the above objects and advantages of the present invention are attained by a resin composition comprising:
(1) 10 to 90 wt% of a first hydrogenated, polymerized styrene which contains a hydrogenated, polymerized styrene unit in an amount of more than 95 wt% and 99.99 wt% or less and has a weight average molecular weight of 30,000 to 300,000; and
(2) 10 to 90 wt% of a second hydrogenated, polymerized styrene which contains a hydrogenated, polymerized styrene unit in an amount of 60 to 95 wt% and has a weight average molecular weight of 30,000 to 200,000, "wt%" being based on 100 wt% of the total of the first hydrogenated, polymerized styrene and the second hydrogenated, polymerized styrene.

According to the present invention, secondly, the above objects and advantages of the present invention are attained by an optical part which is an injection molded product of the above resin composition of the present invention.

### Brief Description of the Drawings

Fig. 1 shows relaxation spectra at 200°C of resin compositions obtained in Examples 1 and 2;
Fig. 2 is a contour graph of the diffraction intensity in the radial direction and circumferential direction of a small-angle X-ray diffraction image of a disk substrate obtained in Comparative Example;
Fig. 3 is a contour graph of the diffraction intensity in the radial direction and circumferential direction of a small angle X-ray diffraction image of a disk substrate obtained in Example 2; and
Fig. 4 shows a diffraction intensity distribution in the radial direction and the radius vector direction of the circumferential direction of small angle X-ray diffraction images of disk substrates obtained in Example 2 and Comparative Example.

### Detailed Description of the Preferred Embodiment

In the present invention, the weight average molecular weight means a weight average molecular weight in terms of polystyrene measured by using tetrahydrofuran (THF) as a solvent.

The hydrogenated, polymerized styrene unit in the present invention denotes a structure unit obtained by hydrogenating the aromatic ring of a styrene polymer unit. The hydrogenated polymer unit of styrene is a vinylcyclohexane polymer unit. Examples of the monomer constituting a styrene polymer include styrene, alkylstyrenes (preferably alkylstyrenes having an alkyl group with 1 to 10 carbon atoms) such as p-methylstyrene, m-methylstyrene, o-methylstyrene, 2,4-dimethylstyrene, 2,5-dimethylstyrene, 3,4-dimethylstyrene, 3,5-dimethylstyrene and p-tert-butystyrene; and α-alkylstyrenes (preferably styrenes having an alkyl group with 1 to 10 carbon atoms at the α-position) such as α-methylstyrene, α-ethylstyrene, α-propylstyrene, α-isopropylstyrene and α-tert-butylstyrene. Out of these monomers, styrene and α-methylstyrene are preferred from the viewpoints of the improvement of stability at a high temperature and cost, and styrene is more preferred.

The first hydrogenated, polymerized styrene used in the present invention contains a hydrogenated, polymerized styrene unit in an amount of more than 95 wt% and 99.99 wt% or less and has a weight average molecular weight of 30,000 to 300,000. The first hydrogenated, polymerized styrene is expected to be effective in shortening the relaxation time of the resin composition when it retains the heat resistance of the resin composition and excellent compatibility with the second constituent component to be described hereinafter at the molten state.

In the first hydrogenated, polymerized styrene used in the present invention, the amount of the hydrogenated, polymerized styrene unit must be more than 95 wt%. When the amount of the hydrogenated, polymerized styrene unit is 95 wt% or less, the heat resistance of the whole resin composition lowers disadvantageously. From this point of view, the amount of the hydrogenated, polymerized styrene unit is preferably 96 wt% or more, more preferably 97 wt% or more, much more preferably 98 wt% or more, further more preferably 99 wt% or more, particularly preferably 99.2 wt% or more.

Conversely, the amount of the hydrogenated, polymerized styrene unit in the first hydrogenated, polymerized styrene must be 99.99 wt% or less. When the amount is larger than 99.99 wt%, it is difficult to maintain excellent compatibility with other constituent components to be described hereinafter at the molten state or the effect of shortening the relaxation time of the polymer is small. From this point of view, the amount of the hydrogenated, polymerized styrene unit is preferably 99.95 wt% or less, more preferably 99.9 wt% or less.

The preferred range of the amount of the hydrogenated, polymerized styrene unit in the first hydrogenated, polymerized styrene is, for example, 99.2 wt% or more and 99.7 wt% or less, or a range selected from combinations of the above preferred upper limit value and the above preferred lower limit value.

The first hydrogenated, polymerized styrene used in the present invention has a weight average molecular weight of 30,000 to 300,000. When the weight average molecular weight is lower than 30,000, the toughness of a molded product deteriorates disadvantageously. From this point of view, the weight average molecular weight is preferably 40,000 or more, more preferably 50,000 or more, particularly preferably 60,000 or more.

Conversely, the weight average molecular weight must be 300,000 or less. When the weight average molecular weight is higher than 300,000, the flowability of the resin composition lowers and the relaxation time becomes too long at the molten state. Therefore, even when an optically isotropic molded product is obtained, molecular orientation tends to remain and it is difficult to obtain a molded product having an excellent physical shape, for example, a disk substrate having little warp.

From this point of view, the weight average molecular weight is preferably 200,000 or less, more preferably 150,000 or less, much more preferably 120,000 or less, particularly preferably 100,000 or less.

The preferred range of the weight average molecular weight of the first hydrogenated, polymerized styrene is 60,000 to 100,000 or a range selected from combinations of the above upper limit value and the above lower limit value.

Another polymer unit constituting the first hydrogenated, polymerized styrene used in the present invention is a polymer unit obtained by hydrogenating a conjugated diene, such as isoprene, 1,3-butadiene, 2,3-dimethyl-1,3-butadiene, 1,3-pentadiene, 1,3-hexadiene, 1,3-cyclohexadiene or 1,4-cyclohexadiene, or a monomer copolymerizable with a styrene monomer, such as an olefin exemplified by ethylene, propylene, isobutene and 4-methylpentene-1, or a cyclic olefin exemplified by norbornene and dicyclopentadiene.

Out of these, isoprene and 1,3-butadiene are preferred from the viewpoints of polymerization activity and the effect of developing physical properties through copolymerization. These monomers may be used alone or in combination of two or more. Although some of them have a double bond between carbons, the polymer unit is converted into a hydrogenated structure by hydrogenation because it is more easily hydrogenated than an aromatic ring when hydrogenating a styrene polymer.

The first hydrogenated, polymerized styrene used in the present invention preferably has the above hydrogenated, polymerized conjugated diene unit or olefin polymer unit as a comonomer component. The amount of the comonomer component is preferably 0.01 to 5 wt%, preferably 0.1 to 4 wt%. The preferred range of the amount is obvious from the above description. The polymer units to be copolymerized preferably form a relatively short chain.

For example, when the hydrogenated conjugated diene is a comonomer component, hydrogenated, polymerized conjugated diene units each sandwiched between hydrogenated, polymerized conjugated diene units are preferably contained in a total amount of 50 wt% or less based on the total of all the hydrogenated, polymerized conjugated diene units. When the number of long chains is too large, the effect of shortening the relaxation time is small and the toughness of the obtained resin composition lowers.

Therefore, the total amount of the hydrogenated, polymerized conjugated diene units each sandwiched between the hydrogenated, polymerized conjugated diene units is preferably 40 wt% or less, more preferably 30 wt% or less, particularly preferably 20 wt% or less based on the total of all the hydrogenated, polymerized conjugated diene units. The bonding manner of the chain, which depends on the molecular structure, may be analyzed by a technique such as NMR.

The first hydrogenated, polymerized styrene used in the present invention is not limited by the production method if it has the above structure but preferably produced by a conventionally known anion polymerization method. A hydrogenation reaction is preferably carried out by anion polymerization in accordance with the procedure of adding a monomer to obtain a copolymer having a desired structure, which differs from that of the polymerization reaction of a normal block copolymer.

The anion polymerization initiator used for polymerization is generally an organic lithium compound. Examples of the organic lithium compound include ethyl lithium, n-propyl lithium, isopropyl lithium, n-butyl lithium, sec-butyl lithium and tert-butyl lithium. Out of these, n-butyl lithium and sec-butyl lithium are preferred from the viewpoints of easy acquisition and the initiative of a polymerization reaction. When an organic lithium compound is used, the polymerization temperature is preferably -20 to 120°C, more preferably 10 to 100°C. Polymerization must be carried out in an inert atmosphere such as nitrogen or argon to prevent the deactivation of a catalyst or the active terminal of the polymer during polymerization.

The styrene polymer used for the hydrogenation reaction is preferably produced with a batch or continuous polymerization reactor.

When the polymerization reaction is carried out in a batch manner, an initiator is used to start the polymerization reaction of a styrene monomer and/or a conjugated diene monomer. All the raw materials to be reacted may be charged at the same time. However, as the conjugated diene monomer generally has higher reactivity than the styrene monomer, the concentration of the conjugated diene monomer tends to be high at one terminal of the polymer.

To cope with this, the styrene monomer and/or conjugated diene monomer are/is preferably divided into a plurality of portions, for example, 2 to 10 portions, or reacted continuously after the start of polymerization. When the styrene monomer and/or conjugated diene monomer are/is divided into a plurality of portions and added a plurality of times, a tapered concentration gradient is apt to be produced according to a difference in reactivity between the monomers. The content of a comonomer component such as a conjugated diene in the polymer is 4 % or less, preferably 3 % or less, more preferably 1 % or less, particularly preferably 0.8 % or less. Therefore, the styrene polymer can be produced as a polymer having a very short copolymer block or no continuous structure.

As for the continuous addition of the styrene monomer and/or conjugated diene monomer, after the start of the polymerization reaction of the styrene monomer and/or conjugated diene monomer, the polymerization reaction is preferably carried out while the styrene monomer and the conjugated diene monomer are added continuously in a predetermined ratio to obtain a polymer having a desired molecular weight. In either case, since the conjugated diene monomer may not remain in the reaction solution at a polymerization temperature depending on an apparatus, the amount of the monomer to be added must be determined in consideration of that amount.

Meanwhile, to carry out a polymerization reaction with a continuous polymerization reactor, a polymerization apparatus comprising cascade type reactors arranged in series may be used. In this case, after an initiator is continuously supplied to start a polymerization reaction, the polymerization reaction is carried out while the styrene monomer and the conjugated diene monomer are added continuously in a predetermined ratio to obtain a polymer having a desired molecular weight.

The first hydrogenated, polymerized styrene used in the present invention can be produced with either one of the above polymerization apparatuses, and the above-described polymer units forming a relatively short chain to be copolymerized can be produced. In either case, as for the reactivity and reactivity ratio of anion polymerization, depending on the types and a combination of the monomers, there are some instances where the first hydrogenated, polymerized styrene is apt to become a block copolymer and others where it forms a random structure simply by reaction. Therefore, the reaction method must be changed according to a combination of the monomers. Therefore, when the first hydrogenated, polymerized styrene is apt to become a block copolymer, the supply of the monomers must be continued after the start of the reaction to well balance the amounts of the monomers or to always maintain the amount of one of the monomers at a high level. The polymerization reaction is generally completed in several minutes to several hours, which depends on the amount and type of the initiator in use, after all the monomers to be polymerized are added. The first hydrogenated, polymerized styrene preferably contains a hydrogenated, polymerized conjugated diene unit as a random comonomer component or tapered comonomer component.

The second hydrogenated, polymerized styrene used in the present invention contains a hydrogenated, polymerized styrene unit in an amount of 60 to 95 wt% and has a weight average molecular weight of 30,000 to 200,000. The second hydrogenated, polymerized styrene is an effective ingredient for improving flowability by shortening the relaxation time due to compatibility with the above first hydrogenated, polymerized styrene at the molten state and retaining toughness at the time of solidification.

The comonomer component preferably has a block structure through phase separation to retain its heat resistance and toughness.

The second hydrogenated, polymerized styrene used in the present invention has a weight average molecular weight of 30,000 to 200,000. When the weight average molecular weight is lower than 30,000, the toughness of the obtained molded product lowers disadvantageously. From this point of view, the weight average molecular weight is preferably 40,000 or more, more preferably 50,000 or more, much more preferably 60,000 or more.

Conversely, the weight average molecular weight must be 200,000 or less. When the weight average molecular weight is higher than 200,000, the flowability of the resin composition lowers at the molten state and the chain of the comonomer component which will be described hereinafter becomes long, whereby phase separation readily occurs. Since the relaxation time thereby becomes too long, even if an optically isotropic molded product is obtained, molecular orientation tends to remain, thereby making it difficult to obtain a molded product having an excellent physical shape, for example, a disk substrate having little warp.

From this point of view, the weight average molecular weight is preferably 180,000 or less, more preferably 150,000 or less, much more preferably 120,000 or less, particularly preferably 100,000 or less.

The preferred range of weight average molecular weight of the second hydrogenated, polymerized styrene is, for example 60,000 to 100,000, or a range selected from combinations of the above upper limit value and the above lower limit value.

Another polymer unit constituting the second hydrogenated, polymerized styrene is a polymer unit obtained by hydrogenating a conjugated diene, such as isoprene, 1,3-butadinee, 2,3-dimethyl-1,3-butadiene, 1,3-pentadiene, 1,3-hexadiene, 1,3-cyclohexadiene or 1,4-cyclohexadiene. Out of these, isoprene and 1,3-butadiene are preferred from the viewpoints of polymerization activity and the effect of developing physical properties through copolymerization. They may be used alone or in combination of two or more. Although some of them have a double bond between carbons after polymerization, as the polymer unit is generally more easily hydrogenated than an aromatic ring when a styrene polymer is to be hydrogenated, it is converted into a hydrogenated structure by hydrogenation. The conjugated diene polymer hydride segment preferably contains a 1,4-addition conjugated diene polymer in an amount of 70 wt% or more. When the content of a 1,2-addition conjugated diene polymer is higher than 30 wt%, the glass transition temperature of the conjugated diene polymer hydride is apt to be high and the toughness is apt to lower disadvantageously. The production of the 1,4-addition conjugated diene polymer will be described hereinafter.

The amount of the hydrogenated, polymerized conjugated diene unit is preferably 5 to 40 wt%. When the amount of the hydrogenated, polymerized conjugated diene unit is smaller than 5 wt%, the effect of improving impact strength becomes unsatisfactory disadvantageously. From this point of view, the amount is preferably 8 wt% or more, more preferably 10 wt% or more, particularly preferably 11 wt% or more.

Conversely, when the amount is larger than 40 wt%, the heat distortion temperature lowers or the hydrogenated, polymerized conjugated diene unit is phase separated at the molten state as will be described hereinafter. From this point of view, the amount is preferably 30 wt% or less, more preferably 20 wt% or less, much more preferably 18 wt% or less, particularly preferably 16 wt% or less.

As for the ratio of the hydrogenated, polymerized styrene unit to the hydrogenated, polymerized conjugated diene unit in the second hydrogenated, polymerized styrene, it is preferred that the amount of the styrene polymer unit be 92 to 84 wt% and the amount of the conjugated diene polymer unit be 8 to 16 wt%. It is more preferred that they be combinations of preferred amounts of the styrene polymer unit and the conjugated diene polymer unit.

When a block essentially composed of the hydrogenated, polymerized styrene unit is represented by S and a block essentially composed of the hydrogenated, polymerized conjugated diene unit is represented by D, the second hydrogenated, polymerized styrene used in the present invention is a diblock polymer having an S-D structure, triblock polymer having an S-D-S structure, tetrablock polymer having an S-D-S-D structure or pentablock polymer having an S-D-S-D-S structure.

There are a case where the S block does not contain any constituent unit of the D block, a case where the S block contains a small amount of the D component at random, and a case where the constituent unit of the D block is copolymerized with a tapered concentration gradient near the D block and the boundary is unclear. There can be the same structures as above for the D block. Further, the S-D-S triblock structure may be a radial structure that the D component has 3 to 6 star-like branches.

In order to improve flowability by shorting the relaxation time of the resin composition of the present invention, the weight average molecular weight of the D block of the second hydrogenated, polymerized styrene is preferably as low as possible. When the molecular weight of the D block is too high, phase separation between the S block and the D block readily occurs at the molten state, thereby extending the relaxation time and reducing flowability with the result that orientation tends to remain. Therefore, it is difficult to obtain a flat substrate in the molding of an optical disk having a thickness of about 0.6 mm.

To prevent phase separation at the molten satate, the weight average molecular weight of the D block which depends on the content of the D block is preferably 20,000 or less, more preferably 15,000 or less, much more preferably 12,000 or less, particularly preferably 11,000 or less.

When the weight average molecular weight of the D block is too low, phase separation between the S block and the D block hardly occurs at the solidification at a low temperature, thereby reducing heat resistance and impact strength. To cause phase separation at a low temperature, the weight average molecular weight of the D block which depends on the content of the D block is preferably 5,500 or more, more preferably 7,000 or more, much more preferably 8,000 or more.

The weight average molecular weight of the D block is optimally 8,000 to 11,000, or a range selected from combinations of the above preferred upper limit and lower limit values.

As for phase separation, when the D block does not contain another constituent unit and the boundary is clear, phase separation tends to occur. In contrast to this, when the D block contains a small amount of another component at random and when the constituent unit of another block is copolymerized with a concentration gradient near the another block and the boundary is unclear, the another component tends to be compatible with the D block.

Further, the S block has a structure that it does not contain a hydrogenated, polymerized conjugated diene unit at all and the boundary is clear, a structure that it contains a small amount of a hydrogenated, polymerized conjugated diene unit at random, or a structure that a hydrogenated, polymerized conjugated diene unit is copolymerized with a concentration gradient near the D block and the boundary is unclear. The amount of the hydrogenated, polymerized conjugated diene unit of the S block must not exceed 5 wt%, preferably 3 wt%, more preferably 2 wt%, much more preferably 1 wt% in order to retain heat resistance such as thermal deformation temperature.

The D block has a structure that it does not contain a hydrogenated, polymerized styrene unit at all and the boundary is clear, a structure that it contains a small amount of a hydrogenated, polymerized styrene unit at random, or a structure that a hydrogenated, polymerized styrene unit is copolymerized with a concentration gradient near the S block and the boundary is unclear. The amount of the hydrogenated, polymerized styrene unit of the D block must not exceed 10 wt%, preferably 8 wt%, more preferably 7 wt%, much more preferably 5 wt% in order to improve impact strength.

In consideration of this tendency, a required molecular structure and molecular weight should be selected according to application purpose.

For example, when replication and the flatness of the substrate are important like a disk substrate, the molecular weight is preferably low to such an extent that physical strength is not impaired. From this point of view, as for the structure of the second hydrogenated, polymerized styrene, a triblock polymer having an S-D-S structure is basically preferred. In this case, the D block tends to be prolonged. The S block and the D block preferably have a structure that the boundary is clear, a structure that they contain a small amount of a hydrogenated, polymerized conjugated diene unit or a hydrogenated, polymerized styrene unit at random, or a structure that the hydrogenated, polymerized conjugated diene unit or the hydrogenated, polymerized styrene unit is copolymerized with a concentration gradient as described above.

The process for producing a styrene polymer used for the production of the second hydrogenated, polymerized styrene is not limited if it has any one of the above structures and conventionally known anion polymerization is preferably used to produce the styrene polymer.

The anion polymerization initiator used for polymerization is generally an organic lithium compound. Examples of the organic lithium compound include ethyl lithium, n-propyl lithium, isopropyl lithium, n-butyl lithium, sec-butyl lithium and tert-butyl lithium. Out of these, n-butyl lithium and sec-butyl lithium are preferred from the viewpoints of easy acquisition and the initiative of a polymerization reaction. When an organic lithium compound is used, the polymerization temperature is preferably -20 to 120°C, more preferably 10 to 100°C. Polymerization must be carried out in an inert atmosphere such as nitrogen or argon to prevent the deactivation of a catalyst and the active terminal of the polymer during polymerization.

The styrene polymer used for a hydrogenation reaction is preferably produced by a batch or continuous polymerization reactor. A preferred example of the production process will be described hereinbelow taking a triblock polymer having an S-D-S structure as an example. It should be understood that a polymer having another structure can be produced in the same manner according to the structure and that the production process used specifically for the S-D-S structure is not described.

When a polymerization reaction is carried out in a batch manner, an initiator is used to start the polymerization of the S block. The method of adding monomers differs according to a copolymer having a desired structure to be obtained. When the structure of the S block is such that it does not contain a hydrogenated, polymerized conjugated diene unit at all and the boundary is clear, the polymerization of only a styrene monomer is started to form the S block. When a small amount of a hydrogenated, polymerized conjugated diene unit is contained at random and when a hydrogenated, polymerized conjugated diene unit is copolymerized with a concentration gradient near the D block and the boundary is unclear, the S block is formed like the first hydrogenated, polymerized styrene.

The D block is then formed. When the D block does not contain a hydrogenated, polymerized styrene unit at all and the boundary is clear, the polymerization reaction of only a comonomer component other than the styrene monomer to be copolymerized is carried out. When a small amount of the hydrogenated, polymerized styrene unit is contained at random and when the hydrogenated, polymerized styrene unit is copolymerized with a concentration gradient near the S block and the boundary is unclear, a copolymerization reaction between a styrene monomer and a comonomer component other than the styrene monomer is carried out according to a desired amount of the copolymer.

The second S block is then formed. This polymerization reaction is carried out in the same manner as the polymerization reaction of the first S block.

Meanwhile, when the polymerization reaction is carried out with a continuous polymerization reactor, a polymerization apparatus comprising cascade type reactors arranged in series may be used. In this case, after the polymerization reaction is started by supplying an initiator continuously, it is carried out while a styrene monomer and a conjugated diene monomer are continuously added in a predetermined ratio to obtain a polymer having a desired molecular weight.

It is preferred that three or more polymerization tanks be prepared, the polymerization of the S block be carried out in the first and third polymerization tanks, and the polymerization of the D block be carried out in the second polymerization tank. The types of the monomers to be added to each polymerization tank may be determined in accordance with the above-described batch polymerization. Depending on the reactivity of each monomer and polymerization conditions, it is more possible that monomers unreacted in the previous polymerization tanks remain in a block after the second block to be copolymerized in a reaction system used in the present invention than in a batch system. Depending on the amount and type of the initiator used, this polymerization reaction is generally completed in several minutes to several hours after the monomers to be polymerized are all added.

In either case, the polymerization reaction is preferably carried out by using a hydrocarbon solvent. Examples of the hydrocarbon solvent include aliphatic hydrocarbons such as pentane, hexane, heptane, octane and decane, alicyclic hydrocarbons such as cyclopentane, cyclohexane, methyl cyclohexane and cyclooctane, and aromatic hydrocarbons such as benzene, toluene and xylene. Out of the hydrocarbon solvents, cyclohexane and methyl cyclohexane are preferred from the viewpoints of solubility and reactivity.

In addition to the above hydrocarbon solvent, a polar solvent may be used to control the polymerization reaction and the micro-structure of a conjugated diene moiety. Examples of the polar solvent include ethers such as tetrahydrofuran, dioxane, diethylene glycol dimethyl ether, diethyl ether, methyl ethyl ether and methyl-t-butyl ether; amines such as triethylamine and tetraethyl ethylene diamine; and phosphines.

After the polymerization reaction, a polymerizable active terminal is preferably deactivated by an alcohol such as methyl alcohol, ethyl alcohol or isopropyl alcohol, or water.

The first hydrogenated, polymerized styrene and the second hydrogenated, polymerized styrene used in the present invention are obtained by hydrogenating the above styrene polymer and have a hydrogenation rate of the aromatic ring of 90 mol% or more. When the hydrogenation rate is lower than 90 mol%, the glass transition temperature and heat resistance stability of the obtained hydrogenated, copolymerized styrene deteriorate disadvantageously. Further, when the hydrogenated, polymerized styrene is used for optical purpose, transparency lowers and the birefringence of a molded product increases disadvantageously. The hydrogenation rate is preferably high but it is actually determined in consideration of the physical properties of the obtained hydrogenated, polymerized styrene and economic efficiency including the equipment and operation of a hydrogenation step required for attaining the above hydrogenation rate.

The hydrogenation rate is preferably 95 mol% or more, more preferably 98 mol% or more, much more preferably 99 mol% or more. Since the double bond between carbons is generally hydrogenated more easily than the aromatic ring in the hydrogenation reaction, it can be considered that almost all the double bonds between carbons are hydrogenated under conditions that the aromatic rings are hydrogenated.

The hydrogenation reaction can be carried out by using a conventionally known hydrogenation reaction catalyst. The catalyst used for the hydrogenation reaction is not particularly limited and any known catalyst which can hydrogenate an aromatic ring and a double bond may be used. The catalyst is a solid catalyst composed of a precious metal such as nickel, palladium, platinum, cobalt, ruthenium or rhodium, oxide thereof, or a compound such as a salt or complex supported on a porous carrier such as carbon, alumina, silica or silica·alumina diatomaceous earth. Out of these, a solid catalyst composed of nickel, palladium or platinum supported on aluminum, silica or silica·alumina diatomaceous earth is preferably used because it has high reactivity. The amount of the hydrogenation reaction catalyst which depends on its catalytic activity is preferably 0.5 to 40 wt% based on the vinyl aromatic hydrocarbon polymer.

The hydrogenation reaction conditions preferably include a hydrogen pressure of 30 to 250 kgf/cm² (3.1 MPa to 25.5 MPa) and a reaction temperature of 70 to 250° C. When the reaction temperature is too low, the reaction hardly proceeds and when the reaction temperature is too high, the molecular weight is readily reduced by the breakage of a molecular chain. To prevent a reduction in molecular weight caused by the breakage of the molecular chain and promote the reaction smoothly, the hydrogenation reaction is preferably carried out at an appropriate temperature and hydrogen pressure which are suitably determined by the type and amount of the used hydrogenation reaction catalyst, the solution concentration and the molecular weight of the copolymer, et al.

The solvent used for the hydrogenation reaction is preferably a solvent which does not become a catalyst poison for the hydrogenation reaction catalyst. It is preferably a saturated aliphatic hydrocarbon such as cyclohexane or methyl cyclohexane used as a solvent for a polymerization reaction. A polar solvent such as an ether, ester or alcohol exemplified by tetrahydrofuran, dioxane and methyl-t-butyl ether may be added to the above solvent in limits that do not prevent the solubility of the copolymer in order to improve an activity of reaction and suppress a reduction in molecular weight caused by the breakage of the molecular chain.

However, when a 1,4-adduct is to be produced in an amount of 70 wt% or more as described above, it can be produced by using a reactive solvent having low polarity which dissolves a styrene-butadiene block copolymer in the production of the styrene-butadiene block copolymer by anion polymerization before hydrogenation. Examples of the reactive solvent include cyclohexane, benzene, toluene and xylene (preferably containing no ether-based polar solvent).

The hydrogenation reaction is preferably carried out while the amount of the styrene polymer to be used in the reaction before hydrogenation is 3 to 50 wt%. When the amount of the polymer is smaller than 3 wt%, it is not preferred from the viewpoints of productivity and economic efficiency and when the amount is 50 wt% or more, the viscosity of the solution becomes too high which is not preferred from the viewpoints of handling properties and reactivity.

After the end of the hydrogenation reaction, the catalyst can be removed by a known post-treatment such as centrifugation or filtration. Since the resin composition of the present invention is melt molded, the content of the residual catalytic metal component in the hydrogenated, polymerized styrene is preferably made as low as possible. As the resin composition of the present invention comprises two different hydrogenated, polymerized styrene components, the two components are mixed together by a method which will be described hereinafter. After the removal of the catalyst, the content of the residual catalytic metal is preferably 10 ppm or less, more preferably 1 ppm or less. A copolymer of hydrogenated, polymerized styrenes of interest can be obtained from a polymer solution from which the hydrogenation reaction catalyst has been removed by the evaporation/distillation, stripping or re-precipitation of the solvent.

Although the resin composition of the present invention comprises the first hydrogenated, polymerized styrene and the second hydrogenated, polymerized styrene, it must contain at least one of them in an amount of 10 wt% or more. When the amount of the first hydrogenated, polymerized styrene is larger than 90 wt%, the heat resistance such as heat distortion temperature of the obtained resin composition becomes high but orientation tends to remain because the relaxation time is still long. From this point of view, the amount of the first hydrogenated, polymerized styrene is preferably 85 wt% or less, more preferably 80 wt% or less, much more preferably 75 wt% or less.

When the amount of the second hydrogenated, polymerized styrene is larger than 90 wt%, the impact strength of the obtained resin composition becomes high but the relaxation time becomes long and the heat distortion temperature lowers due to phase separation disadvantageously. From this point of view, the amount of the second hydrogenated, polymerized styrene is preferably 85 wt% or less, more preferably 80 wt% or less, much more preferably 75 wt% or less.

In consideration of the above point, the compositions of the first hydrogenated, polymerized styrene and the second hydrogenated, polymerized styrene and the composition of the resin composition are determined. The relaxation time (τ) (s) is preferably 10,000 (s) or less when the relaxation spectrum H (τ) at 200° C of the resin composition of the present invention is 10 (Pa). When the relaxation time is longer than 10,000 (s), even if the resin composition has excellent apparent optical properties, due to a long relaxation time, orientation at the time of molding tends to remain in a molded article, thereby making it difficult to obtain a uniform molded product.

The resin composition of the present invention can be produced by mixing the first hydrogenated, polymerized styrene with the second hydrogenated, polymerized styrene so as to form a resin composition having the above predetermined ratio. As means of mixing the two components together, there is employed 1) a method in which after the two components in a solution state are mixed together in a desired ratio before the hydrogenation reaction, the hydrogenation reaction and the removal of the solvent are carried out, 2) a method in which the two components in a solution state are mixed together in a desired ratio after the hydrogenation reaction and then the solvent is removed, or 3) a method in which after the first hydrogenated, polymerized styrene and the second hydrogenated, polymerized styrene extracted after the removal of the solvent are melt mixed together in a desired ratio with a double-screw extruder. Additives such as a stabilizer and a release agent which will be described hereinafter are preferably added simultaneously during the above mixing operation.

To obtain a disk substrate having a thickness of 0.6 mm, for example, warp is readily caused by the residual orientation, whereby it is difficult to obtain a satisfactory substrate. From this point of view, the relaxation time τ (s) when the relaxation spectrum H (τ) at 200°C becomes 10 (Pa) is preferably as short as possible, more preferably 5,000 (s) or less, much more preferably 2,000 (s) or less, particularly preferably 1,000 (s) or less. However, taking into consideration the facts that when the relaxation time is too short, mechanical strength becomes unsatisfactory and that the relaxation time also depends on the glass transition temperature of the resin composition, the relaxation time τ (s) when the relaxation spectrum H (τ) at 200°C becomes 10 (Pa) is practically preferably 0.1 (s) or more. The lower limit of the relaxation time is more preferably 1 (s) or more, more preferably 5 (s) or more.

The relaxation spectrum can be obtained from a complex elastic modulus obtained from vibration experiments, et al by the method described in "Shinbutsurigaku Shimpo Series 8 Rheology" (New Series of Progress in Physics, Vol. 8, Rheology) (written by Misazoh Yamamoto, published by Tsutsumi Shoten, pp. 39, 2. How to obtain complex elastic modulus).

The resin composition of the present invention preferably has a glass transition temperature of 110°C or higher. When the glass transition temperature is lower than 110°C, the application of the resin composition is limited due to its low heat resistance. For example, as the temperature rises due to reading and writing of information by a laser when the resin composition is used in an optical disk substrate, the glass transition temperature is preferably higher than 110° C, more preferably 120° C or higher, much more preferably 130°C or higher, particularly preferably 135°C or higher.

Further, when the resin composition of the present invention is used for optical purpose, it preferably contains foreign substances having a diameter of 0.5 µm or more at a density of 1 x 10⁵/g or less. For example, when it is used in an optical disk substrate such as DVD and the density of foreign substances is higher than 1 x 10⁵/g, an error occurs disadvantageously. The foreign substances include impurities contained in the raw materials, impurities contained in the production process, gelled products of the polymers, the hydrogenation catalyst residue, et al.

To the first and second hydrogenated, polymerized styrenes of the present invention may be added a stabilizer typified by a hindered phenolic stabilizer such as Irganox 1010 or 1076 (of Ciba Geigy Co., Ltd.), benzophenone-based stabilizer such as HP136 (of Ciba Geigy Co., Ltd.), or phosphite-based stabilizer such as Irgafos 168 (of Ciba Geigy Co., Ltd.) in order to improve thermal stability at the time of melt molding. The resin composition of the present invention preferably contains an addition type stabilizer in an amount of 0.01 to 2 parts by weight based on 100 parts by weight of the total of the first and second hydrogenated, polymerized styrenes (A) and (B).

The addition type stabilizer reacts with a radical produced by the cleavage of a polymer at a high temperature to stabilize the polymer. The addition type stabilizer is a compound represented by the following formula: 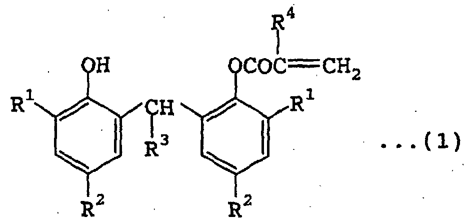 wherein R¹, R² and R³ are each independently a hydrogen atom or alkyl group having 1 to 10 carbon atoms, and R⁴ is a hydrogen atom or methyl group, with the proviso that a plurality of R¹'s and a plurality of R²'s may be the same or different.

The addition type stabilizer represented by the above formula (1) stabilizes a C-radical produced at the terminal of the cleaved chain of the polymer without producing a decomposed product.

Examples of the alkyl group represented by R¹ to R³ in the above formula (1) include methyl group, ethyl group, n-propyl group, isopropyl group, n-butyl group, sec-butyl group, isobutyl group, tert-butyl group and 1,1-dimethylpropyl group. R¹ is preferably a bulky alkyl group which becomes a steric hindrance, such as isopropyl group, sec-butyl group, tert-butyl group or 1,1-dimethylpropyl group from the viewpoints of a thermal stabilization effect and production ease. Out of these, tert-butyl group and 1,1-dimethylpropyl group are preferred. R² is preferably a methyl group, tert-butyl group or 1,1-dimethylpropyl group from the viewpoint of production ease, more preferably a tert-butyl group or 1,1-dimethylpropyl group because methyl group causes a side-reaction accompanied by the extraction of hydrogen. R³ is preferably an alkyl group which hardly becomes a steric hindrance, such as methyl group, ethyl group, propyl group or n-butyl group from the viewpoint of production. R⁴ is a hydrogen atom or methyl group.

Commercially available products of the acrylate compound containing a hindered phenol group represented by the above formula (1) can be acquired under the trade names of Sumilizer GM and Sumilizer GS of Sumitomo Chemical Co., Ltd. When the amount of the addition type stabilizer is smaller than 0.01 part by weight based on 100 parts by weight of the polymer, a thermal stabilization effect becomes small disadvantageously. When the amount is larger than 2 parts by weight, the stabilizer causes a stain on a mold at the time of molding. When the resin composition is used for optical purpose, light transmission on a short wavelength side lowers disadvantageously.

To the resin composition of the present invention may be added additives including a release agent such as a long-chain aliphatic alcohol or long-chain aliphatic ester, lubricant, plasticizer, ultraviolet light absorber, colorant and antistatic agent as required. Since injection molding is preferably used for the resin composition of the present invention, it preferably contains a release agent such as long-chain aliphatic alcohol or long-chain aliphatic ester in an amount of 0.005 to 1 part by weight.

As a release agent, a glycerin monoesterified product is preferably contained in an amount of 0.005 to 1 part by weight based on 100 parts by weight of the resin composition. When the amount is smaller than 0.005 part by weight based on 100 parts by weight of the resin composition, the effect of releasing the resin composition from a mold at the time of injection molding is small. When the amount is larger than 1 part by weight, it causes a stain on a mold at the time of molding and reduces transparency or bleeds out to stain the surface of a molded product if it is used for optical purpose.

Since the resin composition of the present invention has a short relaxation time at the molten state and excellent flowability, it can be molded into parts and members having little molding strain by injection molding. Since a molded product having excellent transparency and small birefringence can be molded from the resin composition of the present invention by injection molding, it can be used as an optical part. Preferred application fields of the resin composition of the present invention include optical parts such as optical disk substrates in which transmit light including CD, DVD, MO and MD, lenses including pick-up lenses for use with these substrates, guide plates for LCD, and optical protective films.

When the resin composition of the present invention is used in the above application fields, it preferably has a light transmittance at the wavelength of light used of 85 % or more. When optical properties are not required, the resin composition can be used in a disk substrate like an HDD substrate.

Although an excellent molded product can be obtained from the resin composition of the present invention by injection molding, it is preferably used as a disk-like molded product. It is preferably a disk substrate having a thickness of 1.3 mm or less, which depends on application purpose. The disk substrate may be used as a disk-type recording medium by forming a metal film or recording layer on at least one side thereof.

The optical disk substrate may be used as a substrate for ROM (Read Only Memory) optical disks from which a user only reads information, such as CD, CD-ROM and DVD-ROM, RAM (Random Access Memory) optical disks which a user can record information and read and write or re-write information as required, such as opto-magnetic disks and phase change disks, and write-once CD-R and DVD-R disks which a user can write information just once.

Various molded articles such as disk substrates can be produced from the resin composition of the present invention with conventionally known injection molding machines. As one of the general molding conditions which greatly depend on the shape of a molded article, the melting temperature for molding is preferably about 300 to 370°C. Since the melt viscosity of the resin composition becomes too high when the melting temperature is lower than 300°C, excellent replication cannot be obtained. When the resin composition is molded at a melting temperature of 370°C or higher, thermal deterioration at the time of melting is marked, whereby toughness becomes poor and there is a possibility that a molded article may break when it is taken out from a mold. The melting temperature for molding is preferably 310°C or higher and 360°C or lower, more preferably 320°C or higher and 350°C or lower.

The mold temperature at the time of molding is preferably in the range of (glass transition temperature of the resin composition in use - 90°C) to (glass transition temperature - 10° C). When the mold temperature is lower than (glass transition temperature - 90°C), the flowability of the resin composition lowers, whereby the surface properties of the obtained molded product deteriorate and the resin is hardly filled into the mold to the full. Particularly when a disk having a pit or land-groove structure is to be molded, the replication of that shape becomes poor disadvantageously.

When the mold temperature is higher than (glass transition temperature - 10° C), the flowability of the resin composition improves but a molded product is deformed when it is taken out from the mold because the above temperature is too close to the glass transition temperature of the resin composition. The preferred range of the mold temperature greatly depends on the molded article. When the precise replication of a pit or land-groove structure is not needed, the mold temperature is more preferably (glass transition temperature - 80° C) to (glass transition temperature - 20° C). When precise replication is needed, the mold temperature is more preferably (glass transition temperature - 60°C) to (glass transition temperature - 10°C).

### Effect of the Invention

A molded article having little residual strain can be produced from the resin composition of the present invention by melt molding because its relaxation is fast when it is molten. Further, a molded article having excellent shape stability under a moist heat environment can be produced from the resin composition of the present invention because its water absorption is low due to its molecular structure. An optical product typified by an optical disk or pick-up lens can be preferably produced from the resin composition because it has excellent transparency and small birefringence.

### Examples

The following examples are provided for the purpose of further illustrating the present invention but are in no way to be taken as limiting. "Parts" in Examples means "parts by weight".

Cyclohexane, methyl-t-butyl ether (solvents), styrene and isoprene all of which were fully dried by distillation purification were used.

An n-hexane solution was purchased from Kanto Kagaku Co., Ltd. and used directly as n-butyl lithium.

A nickel/silica·alumina catalyst (Ni content: 65 wt%) was purchased from Aldrich Co., Ltd. and used directly.

Physical properties were measured by the following methods in Examples. Weight average molecular weight: The molecular weight in terms of polystyrene was measured in THF as a solvent by gel permeation chromatography (Showdex System-11 GPC of Showa Denko K.K.).
Glass transition temperature (Tg): This was measured at a temperature elevation rate of 20° C/min with the 2920 DSC of TA Instruments Co., Ltd.
Copolymerization rate and hydrogenation rate: The hydrogenation rate was determined by ¹H-NMR measurement using the JNR-EX270 nuclear magnetic resonance absorber of JEOL Corporation.
Relaxation spectrum and relaxation time: The frequency dispersion of complex elastic modulus was measured at 200° C, 230° C and 260° C using the RDAII of Rheometric Scientific Co., Ltd. and a corn plate jig. A master curve was drawn based on the principle of superposition of time and temperature and the relaxation spectrum H1 (τ) was computed by primary approximation using G' (ω) in accordance with the method described in "Shinbutsurigaku Shinpo Series 8 Rheology" (written by Misazoh Yamamoto, published by Tsutsumi Shoten, p. 39, 2. how to obtain complex elastic modulus). The relaxation time was read from the relaxation spectrum. Izod impact strength: A 1/4 inch-thick test sample was prepared by injection molding at a melting temperature of 300°C and a mold temperature of 70°C to carry out notched and unnotched impact tests using the UF IMPACT TESTER of Kamishima Seisakusho Co., Ltd.
Molding of disk substrate: A DVD disk substrate having a diameter of 12 cm and a thickness of 0.6 mm was produced by injection compression molding using an injection molding machine (MO40D3H (trade name) of Nissei Jushi Kogyo Co., Ltd.), a DVD mold and a stamper having a land-groove structure (capacity of 2.6 GB) by controlling the temperature of a cylinder and the temperature of a injection mold.
Replication: This was judged from the sectional form of a disk substrate at a position 55 mm away from the center of the substrate using an interatomic force microscope (SFA-300 (trade name) of Seiko Instruments Inc.).
Warp of disk substrate: The angular deviation α (° ) of a disk substrate alone obtained by injection compression molding in the radial direction was measured in accordance with JIS X6243. This is the largest absolute value of α measured at each point of the disk.
X-ray small-angle diffraction: SAXS measurement was carried out with a rotary cathode X-ray source apparatus (RU-200B of Rikagaku Co., Ltd., λ (Cu·K_{α}) = 0.154 nm) at 45 KV and 70 mA. The incident X-rays are monochromatic light from an osmium parfocal mirror and focused, and a set of three pinhole collimators was used. The diffraction pattern was detected by an image-forming plate (IP) having an area of 120 x 120 mm² (resolution of 50 µm). The distance between the sample and the detector was 720 mm. To reduce air diffraction and absorption, a vacuum chamber was installed between the sample and IP. Three sample pieces cut out from the disk substrate were placed one upon another to measure about 1.8 mm x 10 mm x 10 mm.

### Production Example 1

### First hydrogenated, polymerized styrene

250 g of styrene, 3.8 g of isoprene and 1,286 g of cyclohexane were dried and charged into a metal autoclave equipped with a stirrer which had been fully dried and substituted with nitrogen. After the resulting solution was heated at 40°C, 4.9 ml of a 1.6 M solution of n-butyl lithium-cyclohexane was added to carry out a reaction for 1.5 hours. Subsequently, a dried solution consisting of 250 g of styrene, 3.8 g of isoprene and 1,286 g of cyclohexane was added to carry out a reaction for 1.5 hours, and then a dried solution consisting of 250 g of styrene, 3.8 g of isoprene and 1,286 g of cyclohexane was added to further carry out the reaction for 1.5 hours. After the end of the reaction, 1.6 g of 2-propanol was added to stabilize the terminal of a polymer in order to obtain a styrene-isoprene copolymer. The copolymer had a number average molecular weight obtained from GPC of 112,000 and a weight average molecular weight of 123,000. The weight ratio of styrene to isoprene obtained by ¹H-NMR was 99.5/0.5.

A slurry consisting of 80 g of nickel/silica alumina and 200 g of cyclohexane and 650 g of methyl-5-butyl ether were added to this solution to carry out a hydrogenation reaction at a hydrogen pressure of 10 MPa and a temperature of 180°C for 4 hours. After the end of the reaction, the solution was cooled to normal temperature and taken out from the autoclave, and the hydrogenation reaction catalyst was separated by filtration using a 0.1 µ membrane filter at a nitrogen pressure of 0.4 MPa. The obtained solution was designated as solution 1.

20 g of the solution 1 was collected, re-precipitated with 2-propanol, washed with clean 2-propanol and dried under vacuum at 60°C to obtain 3.4 g of a copolymer flake. This flake had a number average molecular weight obtained by GPC of 84,000, a weight average molecular weight of 93,000 and a hydrogenation rate obtained by ¹H-NMR of 99 % or more.

### Production Example 2

### Second hydrogenated, polymerized styrene

After a dried solution consisting of 375 g of styrene and 1,830 g of cyclohexane was charged into a metal autoclave equipped with a stirrer which had been fully dried and substituted with nitrogen and heated at 40°C, 7.9 ml of a 1.6 M solution of n-butyl lithium-cyclohexane was added to carry out a reaction for 1.5 hours. Subsequently, a solution consisting of 112 g of isoprene and 500 g of cyclohexane which had been dried with a molecular sieve 4A was added to carry out a reaction for 1.5 hours, and then a dried solution consisting of 375 g of styrene and 1,830 g of cyclohexane was added to further carry out the reaction for 1.5 hours. After the end of the reaction, 1.6 g of 2-propanol was added to deactivate the terminal of a polymer in order to obtain a styrene-isoprene-styrene block copolymer. The copolymer had a number average molecular weight obtained from GPC of 68,000 and a weight average molecular weight of 79,000. The weight ratio of styrene to isoprene obtained by ¹H-NMR was 88/12.

A slurry consisting of 80 g of nickel/silica alumina and 200 g of cyclohexane and 650 g of methyl-t-butyl ether were added to this solution to carry out a hydrogenation reaction at a hydrogen pressure of 10 MPa and a temperature of 180°C for 4 hours. The reaction solution was cooled to normal temperature and taken out from the autoclave and then the hydrogenation reaction catalyst was removed using a membrane filter having a nominal opening diameter of 0.1 µ at a nitrogen pressure of 0.4 MPa. The obtained solution was designated as solution 2.

20 g of the solution 2 was collected, re-precipitated with 2-propanol, washed with clean 2-propanol and dried under vacuum at 60°C to obtain 3.8 g of a copolymer flake. This flake had a number average molecular weight obtained by GPC of 60,000, a weight average molecular weight of 70,000 and a hydrogenation rate obtained by ¹H-NMR of 99 % or more.

### Example 1

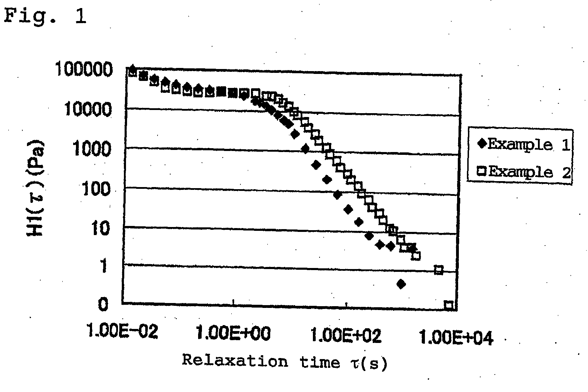

The solution 1 and the solution 2 were mixed together in a copolymer ratio of 1:1, the Sumilizer GS (of Sumitomo Chemical Co., Ltd.) was added in an amount of 0.5 part by weight based on 100 parts by weight of the copolymer, and the solution was heated to 260° C and depressurized to 1 mmHg gradually to remove cyclohexane. The obtained resin composition had a glass transition temperature of 138° C. The relaxation spectrum at 200°C of the resin composition is shown in Fig. 1. The relaxation time τ (s) when the relaxation spectrum H1 (τ) became 10 (Pa) and Izod impact strength of the obtained resin composition are shown in Table 1.

### Example 2

Raw materials were divided into three portions and charged three times to produce a copolymer having a styrene/isoprene weight ratio of 99.5/0.5 which was then subjected to a hydrogenation reaction so as to obtain a copolymer having a hydrogenation rate of 99 % or more and a weight average molecular weight of 92,000 in the same manner as in Production Example 1. A copolymer having a styrene/isoprene weight ratio of 88/12 was produced and subjected to a hydrogenation reaction to obtain a copolymer having a hydrogenation rate of 99 % or more and a weight average molecular weight of 84,000 in the same manner as in Production Example 2.

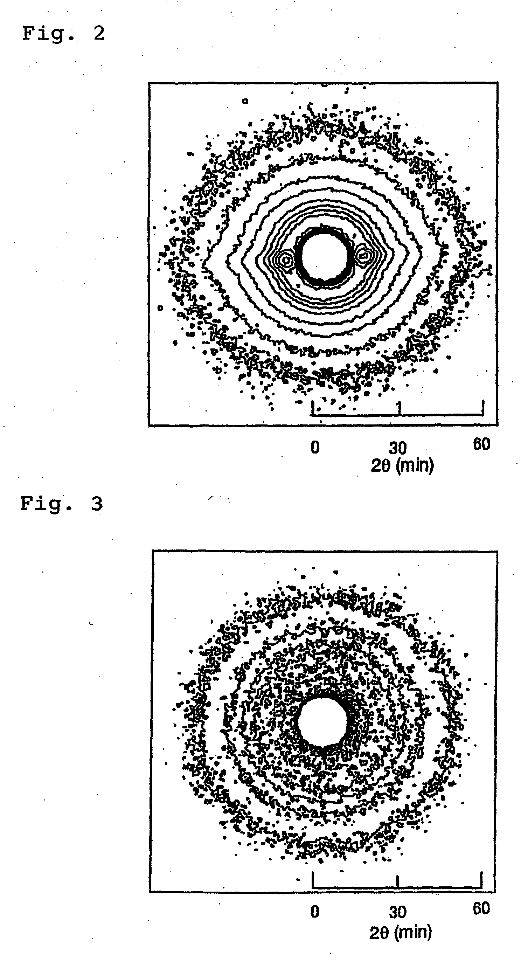

Further, the above copolymers were mixed together in a weight ratio of 1:1, and the Sumilizer GS (of Sumitomo Chemical Co., Ltd.) was added in an amount of 0.5 part by weight based on 100 parts by weight of the total of the copolymers to obtain a resin composition in the same manner as in Example 1. The glass transition temperature of the obtained resin composition was 139°C. The relaxation spectrum of the resin composition is shown in Fig. 1. The relaxation time τ (s) when the relaxation spectrum H1 (τ) became 10 (Pa) is shown in Table 1. A disk substrate was molded from the obtained resin composition at a melting temperature of 320°C and a mold temperature of 115°C. The obtained disk substrate had a well replicated land-groove structure. The measurement result of warp is shown in the table. The measurement of small angle X-ray diffraction was made on a sample cut out from a portion 40 mm away from the center of the obtained disk substrate. The results are shown in Fig. 3 and Fig. 4. Diffraction caused by phase separation was observed but it was confirmed from the results that the disk substrate had no anisotropy in the radial direction and circumferential direction.

### Example 3

Raw materials were divided into three portions and charged three times to produce a copolymer having a styrene/isoprene weight ratio of 99.5/0.5 which was then subjected to a hydrogenation reaction to obtain a copolymer having a hydrogenation rate of 99 % or more and a weight average molecular weight of 140,000 in the same manner as in Production Example 1. A copolymer having a styrene/isoprene weight ratio of 85/15 was produced and subjected to a hydrogenation reaction to obtain a copolymer having a hydrogenation rate of 99 % or more and a weight average molecular weight of 67,000 in the same manner as in Production Example 2.

The above copolymers were mixed together in a weight ratio of 1:1 in the same manner as in Example 1, and the Sumilizer GS (of Sumitomo Chemical Co., Ltd.) was added in an amount of 0.5 part by weight based on 100 parts by weight of the total of the copolymers to obtain a resin composition. The glass transition temperature of the obtained resin composition was 142°C. The relaxation time τ (s) when the relaxation spectrum H1 (τ) became 10 (Pa) and Izod impact strength of the obtained resin composition are shown in Table 1.

### Comparative Example 1

An S-D-S triblock copolymer having a styrene/isoprene weight ratio of 90/10 was polymerized by anion polymerization and subjected to a hydrogenation reaction to obtain a hydrogenated styrene-isoprene-styrene triblock copolymer in the same manner as in Production Example 2. The obtained copolymer had a weight average molecular weight of 77,000, a hydrogenation rate obtained by ¹H-NMR of 99 % or more and a glass transition temperature of 136° C. The relaxation time τ (s) when the relaxation spectrum H1 (τ) became 10 (Pa) and Izod impact strength of the obtained resin composition are shown in Table 1.

When a disk substrate was molded from this copolymer in the same manner as in Example 2, it cracked around a center hole. The measurement of small angle X-ray diffraction was made on this disk substrate. The results are shown in Fig. 2 and Fig. 4.

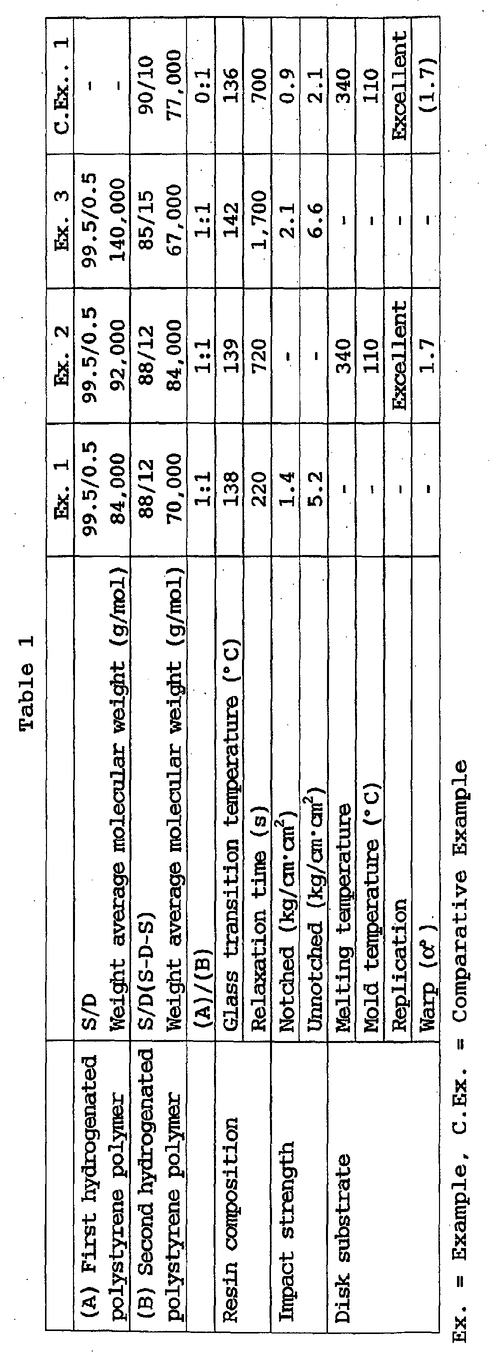

## Claims

1. A resin composition comprising:
(1) 10 to 90 wt% of a first hydrogenated, polymerized styrene which contains a hydrogenated, polymerized styrene unit in an amount of more than 95 wt% and 99.99 wt% or less and has a weight average molecular weight of 30,000 to 300,000; and
(2) 10 to 90 wt% of a second hydrogenated, polymerized styrene which contains a hydrogenated, polymerized styrene unit in an amount of 60 to 95 wt% and has a weight average molecular weight of 30,000 to 200,000,
"wt%" being based on 100 wt% of the total of the first hydrogenated, polymerized styrene and the second hydrogenated, polymerized styrene.

2. The resin composition of claim 1, wherein the first hydrogenated, polymerized styrene contains a hydrogenated, polymerized conjugated diene unit as a comonomer component in an amount of 0.01 to 5 wt%.

3. The resin composition of claim 2, wherein the first hydrogenated, polymerized styrene contains a hydrogenated, polymerized conjugated diene unit as a random comonomer component or tapered comonomer component.

4. The resin composition of claim 1, wherein the second hydrogenated, polymerized styrene contains a hydrogenated, polymerized conjugated diene unit as a comonomer component in an amount of 5 to 40 wt%.

5. The resin composition of claim 4, wherein the second hydrogenated, polymerized styrene is a block polymer comprising a hydrogenated, polymerized styrene unit block and a hydrogenated, polymerized conjugated diene unit block.

6. An optical part which is an injection molded article of the resin composition of any one of claims 1 to 5.

7. The optical part of claim 6 which is a disk substrate having a thickness of 1.3 mm or less.

8. A disk type recording medium comprising the disk substrate having a thickness of 1.3 mm or less of claim 7 and a recording layer formed on the disk substrate.
